# EUROPEAN PATENT SPECIFICATION

(11) **EP 0 834 123 B1**
(45) Date of publication and mention of the grant of the patent: **16.02.2000**
(21) Application number: 96917040.6
(22) Date of filing: 03.06.1996
(51) Int. Cl.: G06F 9/46

(54) **MACHINE CONTROL MODULE FOR A PROCESSOR**
STEUERMODUL FÜR EINEN PROZESSOR
MODULE DE CONTROLE AUTOMATIQUE POUR PROCESSEUR

(30) Priority: 02.06.1995 GB 9510870; 11.07.1995 GB 9514147
(43) Date of publication of application: 08.04.1998
(73) Proprietor: Alcatel USA, Inc., Plano, Texas 75075 (US)
(72) Inventor: COOPER, Guy Alexander, Windsor, Berkshire SL4 5NF (GB)
(74) Representative: Harris, Ian Richard
(86) International application number: US9608514
(87) International publication number: WO9638786

(56) References cited:
- BYTE, vol. 19, no. 1, January 1995, ST PETERBOROUGH US, pages 131-136, XP000418167 DICK POUNTAIN: "The Chorus Microkernel"
- IBM TECHNICAL DISCLOSURE BULLETIN, vol. 38, no. 1, January 1995, NEW YORK US, pages 619-620, XP002015078 "Process Input/Output in an Object-Oriented Environment"
- RESEARCH DISCLOSURE, no. 333, January 1992, HAVANT GB, page 12 XP002015079 ANONYMOUS: "Portable Intercrosses Message Queue Service"

## Description

The present invention relates to a machine control module for a processor, for example for processing elements of a telecommunications system.

The invention finds particular application in a telecommunications system where various elements of the system are provided with processing elements in the form of microprocessors and microcontrollers, for example for controlling communications between the elements.

In such an environment it has typically been a time consuming and expensive task to ensure that software compatibility is ensured given that different hardware processing units may be used in the system at one time and that these may be changed with time as well. Operating systems for microprocessors are known, but these are typically relatively large cumbersome pieces of software, and are typically not portable to microcontrollers. For example, in an article by Dick Pountain, entitled "The Chorus Microkernel" (published in Byte, Vol 19, No 1, Jan 1995, St Peterborough, US at pages 131-136) there is described a micro-kernel-based distributed unix operating system, which is portable to different CPU architectures.

Accordingly, it is desirable to provide a simple and flexible operating environment which can easily be ported onto different microprocessors, microcontrollers and other processors.

In accordance with one aspect of the invention, there is provided a machine control module for initialising a portable operating system on a processor, the machine control module comprising a processor independent kernel object and one or more processor specific objects, the kernel object being arranged to be responsive on initialisation to parameters identifying a processor specific object to establish a link from the kernel object to the processor specific object for configuring the kernel object to the specific processor.

The invention provides an easily portable operating environment which provides a processor independent interface for applications software to run on different processors, such as microprocessors and micro controllers.

At least one processor specific object preferably defines an interrupt function for the processor.

Preferably, the kernel object is responsive to parameters identifying a processor specific object to establish a pointer table containing pointers to the processor specific object.

The processor can be a single microcontroller or a microprocessor or a plurality of microcontrollers and/or microprocessors operable in a multi-processor operating environment.

Preferably, the module establishes a common memory address space for the plurality of the processors.

Preferably also, the address space comprises a first area for queues and buffers and a second area for signalling locations and semaphores, the latter to avoid contention problems.

Preferably the module is responsive to multiple instantiations to establish a separate memory partitions for each instantiation.

The invention also provides a telecommunications system element comprising one or more processors for passing messages to and from the element and a portable operating system formed by a machine control module as defined above initialised on at least one processor.

In accordance with another aspect of the invention, there is provided a method of initialising a portable operating system, the method comprising supplying parameters identifying a processor specific object to a processor independent kernel object to establish a link from the kernel object to the processor specific object, whereby the processor specific object configures the processor independent kernel object to the specific processor.

An embodiment of the invention will be described hereinafter, by way of example only, with reference to the accompanying drawings in which like reference signs are used for like features and in which:
Figure 1 is a schematic overview of an example of a wireless telecommunications system in which an example of the present invention is included;
Figure 2 is a schematic illustration of an example of a subscriber terminal of the telecommunications system of Figure 1;
Figure 3 is a schematic illustration of an example of a central terminal of the telecommunications system of Figure 1;
Figure 3A is a schematic illustration of a modem shelf of a central terminal of the telecommunications system of Figure 1;
Figure 4 is an illustration of an example of a frequency plan for the telecommunications system of Figure 1;
Figures 5A and 5B are schematic diagrams illustrating possible configurations for cells for the telecommunications system of Figure 1;
Figure 6 is a schematic diagram illustrating aspects of a code division multiplex system for the telecommunications system of Figure 1;
Figure 7 is a schematic diagram illustrating signal transmission processing stages for the telecommunications system of Figure 1;
Figure 8 is a schematic diagram illustrating signal reception processing stages for the telecommunications system of Figure 1;
Figure 9 is a schematic diagram illustrating in more detail the configuration of the modem shelf of Figure 3A;
Figure 10 is a schematic block diagram illustrating control protocols for the telecommunication system of Figure 1;
Figure 11 is a schematic block diagram illustrating message handling modules for passing control messages between a site controller or element manager and a modem shelf controller in the telecommunication system of Figure 1;
Figure 12 is a schematic block diagram illustrating message packet construction for control messages in Figure 11;
Figure 13 is a message accumulation state diagram for a message handling module of Figure 11;
Figure 14 is a schematic diagram illustrating the different protocol levels for connection of a master to a slave for communication between a shelf controller and slave elements;
Figure 15 is a schematic diagram illustrating the establishment of connection of a master to a slave for communication between a shelf controller and slave elements;
Figure 16 is a schematic diagram illustrating the sending of a message from the shelf controller to a slave element;
Figure 17 is a schematic block diagram illustrating the software environment of a microcontroller in a slave element;
Figure 18 is a schematic block diagram illustrating aspects of virtual machine controller in accordance with the invention;
Figure 19 is an alternative view of aspects of the virtual machine controller of Figure 18; and
Figure 20 is a schematic representation of the use of shared memory for interfacing between a microcontroller and a microcomputer in a slave element.

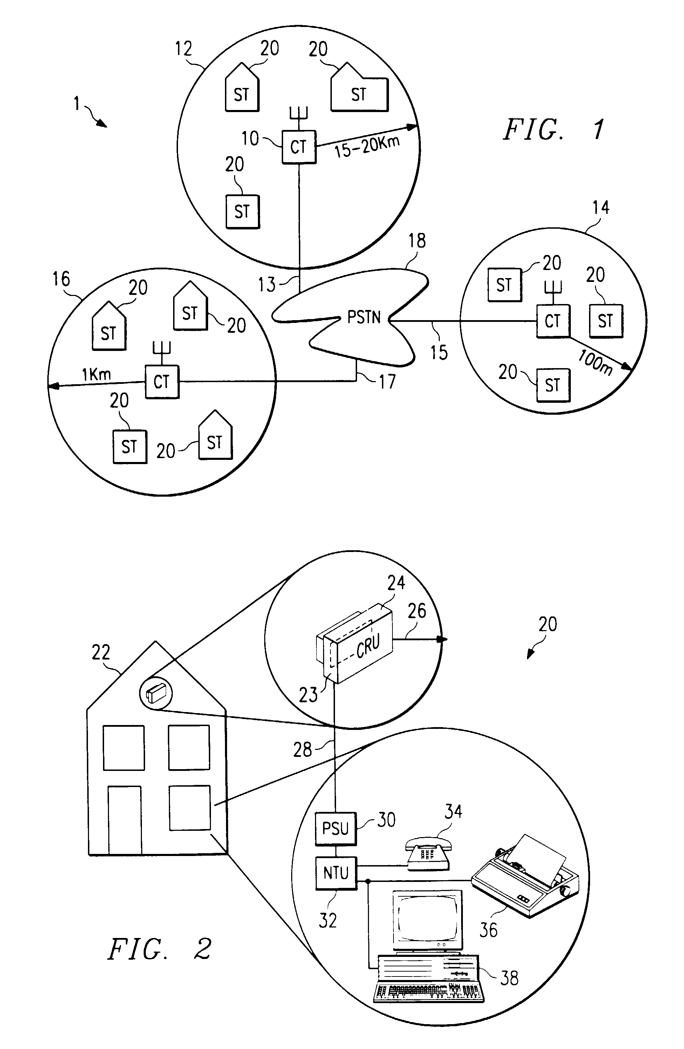

Figure 1 is a schematic overview of an example of a wireless telecommunications system. The telecommunications system includes one or more service areas 12, 14 and 16, each of which is served by a respective central terminal (CT) 10 which establishes a radio link with subscriber terminals (ST) 20 within the area concerned. The area which is covered by a central terminal 10 can vary. For example, in a rural area with a low density of subscribers, a service area 12 could cover an area with a radius of 15-20Km. A service area 14 in an urban environment where is there is a high density of subscriber terminals 20 might only cover an area with a radius of the order of 100m. In a suburban area with an intermediate density of subscriber terminals, a service area 16 might cover an area with a radius of the order of 1Km. It will be appreciated that the area covered by a particular central terminal 10 can be chosen to suit the local requirements of expected or actual subscriber density, local geographic considerations, etc, and is not limited to the examples illustrated in Figure 1. Moreover, the coverage need not be, and typically will not be circular in extent due to antenna design considerations, geographical factors, buildings and so on, which will affect the distribution of transmitted signals.

The central terminals 10 for respective service areas 12, 14, 16 can be connected to each other by means of links 13, 15 and 17 which interface, for example, with a public switched telephone network (PSTN) 18. The links can include conventional telecommunications technology using copper wires, optical fibres, satellites, microwaves, etc.

The wireless telecommunications system of Figure 1 is based on providing fixed microwave links between subscriber terminals 20 at fixed locations within a service area (e.g., 12, 14, 16) and the central terminal 10 for that service area. In a preferred embodiment each subscriber terminal 20 is provided with a permanent fixed access link to its central terminal 10. However, in alternative embodiments demand-based access could be provided, so that the number of subscribers which can be serviced exceeds the number of telecommunications links which can currently be active.

Figure 2 illustrates an example of a configuration for a subscriber terminal 20 for the telecommunications system of Figure 1. Figure 2 includes a schematic representation of customer premises 22. A customer radio unit (CRU) 24 is mounted on the customer's premises. The customer radio unit 24 includes a flat panel antenna or the like 23. The customer radio unit is mounted at a location on the customer's premises, or on a mast, etc., and in an orientation such that the flat panel antenna 23 within the customer radio unit 24 faces in the direction 26 of the central terminal 10 for the service area in which the customer radio unit 24 is located.

The customer radio unit 24 is connected via a drop line 28 to a power supply unit (PSU) 30 within the customer's premises. The power supply unit 30 is connected to the local power supply for providing power to the customer radio unit 24 and a network terminal unit (NTU) 32. The customer radio unit 24 is also connected via the power supply unit 30 to the network terminal unit 32, which in turn is connected to telecommunications equipment in the customer's premises, for example to one or more telephones 34, facsimile machines 36 and computers 38. The telecommunications equipment is represented as being within a single customer's premises. However, this need not be the case, as the subscriber terminal 20 preferably supports either a single or a dual line, so that two subscriber lines could be supported by a single subscriber terminal 20. The subscriber terminal 20 can also be arranged to support analogue and digital telecommunications, for example analogue communications at 16, 32 or 64kbits/sec or digital communications in accordance with the ISDN BRA standard.

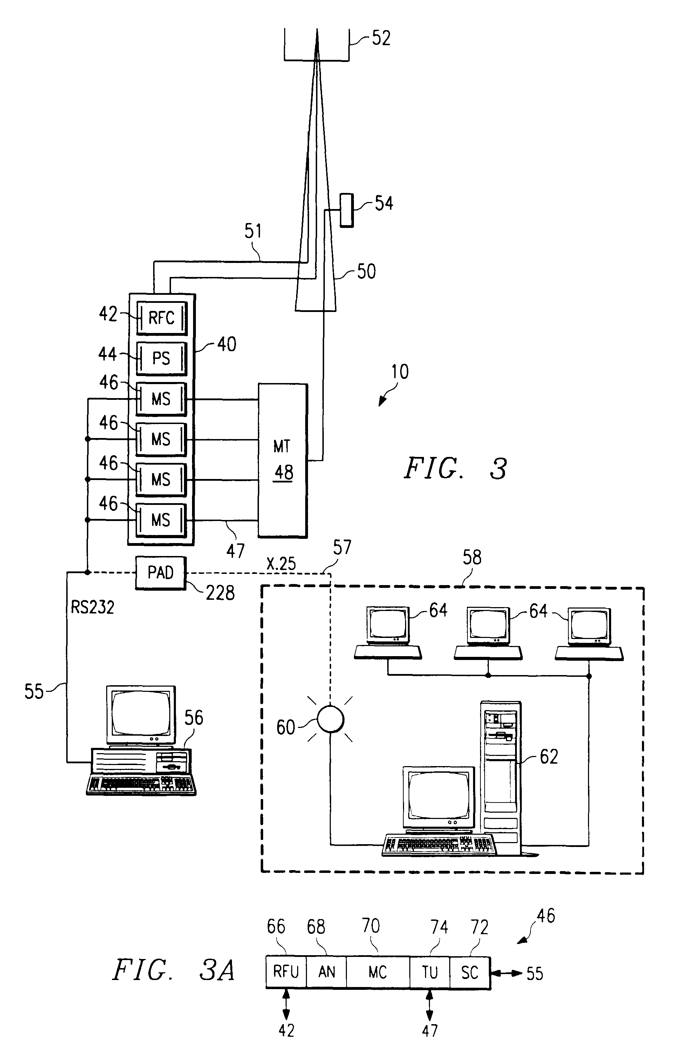

Figure 3 is a schematic illustration of an example of a central terminal of the telecommunications system of Figure 1. The common equipment rack 40 comprises a number of equipment shelves 42, 44, 46, including a RF Combiner and power amp shelf (RFC) 42, a Power Supply shelf (PS) 44 and a number of (in this example four) Modem Shelves (MS) 46. The RF combiner shelf 42 allows the four modem shelves 46 to operate in parallel. It combines and amplifies the power of four transmit signals, each from a respective one of the four modem shelves, and amplifies and splits received signals four way so that separate signals may be passed to the respective modem shelves. The power supply shelf 44 provides a connection to the local power supply and fusing for the various components in the common equipment rack 40. A bidirectional connection extends between the RF combiner shelf 42 and the main central terminal antenna 52, typically an omnidirectional antenna, mounted on a central terminal mast 50.

This example of a central terminal 10 is connected via a point-to-point microwave link to a location where an interface to the public switched telephone network 18, shown schematically in Figure 1, is made. As mentioned above, other types of connections (e.g., copper wires or optical fibres) can be used to link the central terminal 10 to the public switched telephone network 18. In this example the modem shelves are connected via lines 47 to a microwave terminal (MT) 48. A microwave link 49 extends from the microwave terminal 48 to a point-to-point microwave antenna 54 mounted on the mast 50 for a host connection to the public switched telephone network 18.

A personal computer, workstation or the like can be provided as a site controller (SC) 56 for supporting the central terminal 10. The site controller 56 can be connected to each modem shelf of the central terminal 10 via, for example, RS232 connections 55. The site controller 56 can then provide support functions such as the localisation of faults, alarms and status and the configuring of the central terminal 10. A site controller 56 will typically support a single central terminal 10, although a plurality of site controllers 56 could be networked for supporting a plurality of central terminals 10.

As an alternative to the RS232 connections 55, which extend to a site controller 56, data connections such as an X.25 link 57 (shown with dashed lines in Figure 3) could instead be provided from a pad 228 to a switching node 60 of an element manager (EM) 58. An element manager 58 can support a number of distributed central terminals 10 connected by respective connections to the switching node 60. The element manager 58 enables a potentially large number (e.g., up to, or more than 1000) of central terminals 10 to be integrated into a management network. The element manager 58 is based around a powerful workstation 62 and can include a number of computer terminals 64 for network engineers and control personnel.

Figure 3A illustrates various parts of a modem shelf 46. A transmit/receive RF unit (RFU - for example implemented on a card in the modem shelf) 66 generates the modulated transmit RF signals at medium power levels and recovers and amplifies the baseband RF signals for the subscriber terminals. The RF unit 66 is connected to an analogue card (AN) 68 which performs A-D/D-A conversions, baseband filtering and the vector summation of 15 transmitted signals from the modem cards (MCs) 70. The analogue unit 68 is connected to a number of (typically 1-8) modem cards 70. The modem cards perform the baseband signal processing of the transmit and receive signals to/from the subscriber terminals 20. This includes 1/2 rate convolution coding and x 16 spreading with CDMA codes on the transmit signals, and synchronisation recovery, de-spreading and error correction on the receive signals. Each modem card 70 in the present example has two modems, each modem supporting one subscriber link (or two lines) to a subscriber terminal 20. Thus, with two modems per card and 8 modems per modem shelf, each modem shelf could support 16 possible subscriber links. However, in order to incorporate redundancy so that a modem may be substituted in a subscriber link when a fault occurs, only up to 15 subscriber links are preferably supported by a single modem shelf 46. The 16th modem is then used as a spare which can be switched in if a failure of one of the other 15 modems occurs. The modem cards 70 are connected to the tributary unit (TU) 74 which terminates the connection to the host public switched telephone network 18 (e.g., via one of the lines 47) and handles the signalling of telephony information to, for example, up to 15 subscriber terminals (each via a respective one of 15 of the 16 modems).

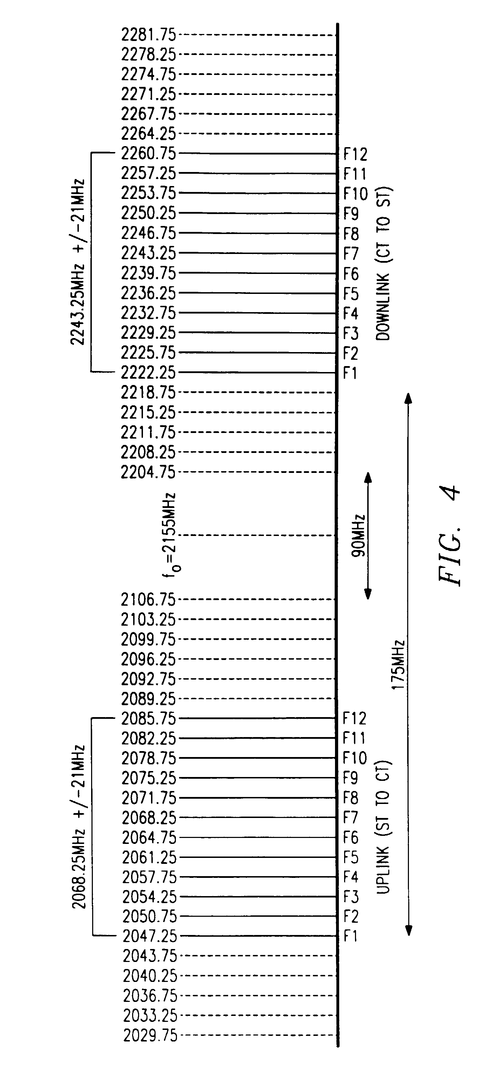

The wireless telecommunications between a central terminal 10 and the subscriber terminals 20 could operate on various frequencies. Figure 4 illustrates one possible example of the frequencies which could be used. In the present example, the wireless telecommunication system is intended to operate in the 1.5-2.5GHz Band. In particular the present example is intended to operate in the Band defined by ITU-R (CCIR) Recommendation F.701 (2025-2110MHz, 2200-2290MHz). Figure 4 illustrates the frequencies used for the uplink from the subscriber terminals 20 to the central terminal 10 and for the downlink from the central terminal 10 to the subscriber terminals 20. It will be noted that 12 uplink and 12 downlink radio channels of 3.5MHz each are provided centred about 2155MHz. The spacing between the receive and transmit channels exceeds the required minimum spacing of 70MHz.

In the present example, as mentioned above, each modem shelf will support 1 frequency channel (i.e. one uplink frequency plus the corresponding downlink frequency). Up to 15 subscriber links may be supported on one frequency channel, as will be explained later. Thus, in the present embodiment, each central terminal 10 can support 60 links, or 120 lines.

Typically, the radio traffic from a particular central terminal 10 will extend into the area covered by a neighbouring central terminal 10. To avoid, or at least to reduce interference problems caused by adjoining areas, only a limited number of the available frequencies will be used by any given central terminal 10.

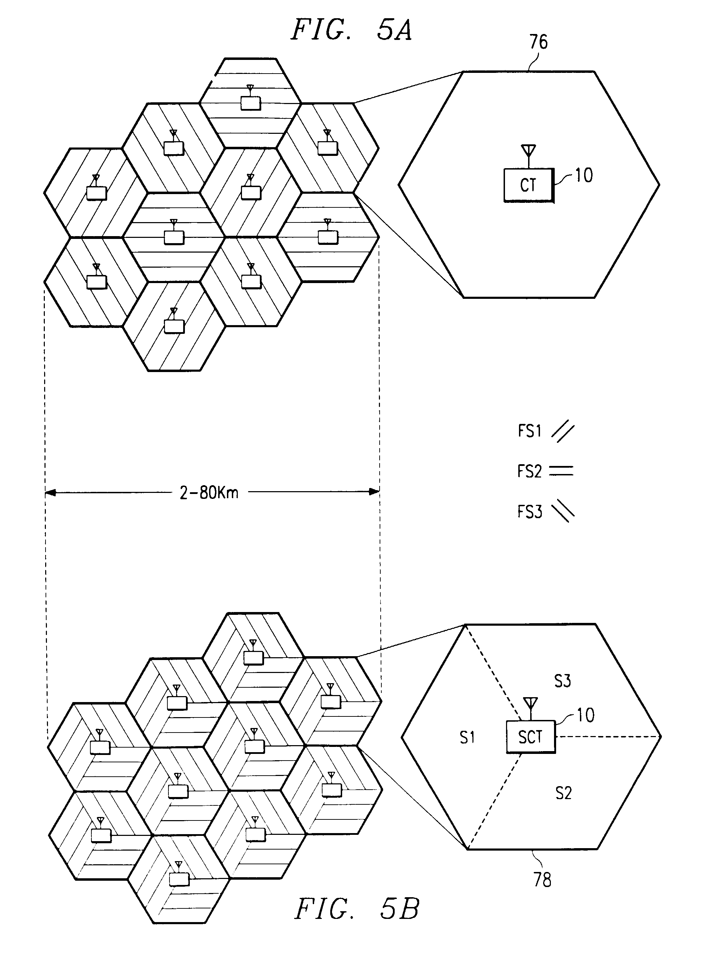

Figure 5A illustrates one cellular type arrangement of the frequencies to mitigate interference problems between adjacent central terminals 10. In the arrangement illustrated in Figure 5A, the hatch lines for the cells 76 illustrate a frequency set (FS) for the cells. By selecting three frequency sets (e.g., where: FS1 = F1, F4, F7, F10; FS2 = F2, F5, F8, F11; FS3 = F3, F6, F9, F12), and arranging that immediately adjacent cells do not use the same frequency set (see, for example, the arrangement shown in Figure 5A), it is possible to provide an array of fixed assignment omnidirectional cells where interference between nearby cells can be avoided. The transmitter power of each central terminal 10 is set such that transmissions do not extend as far as the nearest cell which is using the same frequency set. Thus each central terminal 10 can use the four frequency pairs (for the uplink and downlink, respectively) within its cell, each modem shelf in the central terminal 10 being associated with a respective RF channel (channel frequency pair).

With each modem shelf supporting one channel frequency (with 15 subscriber links per channel frequency) and four modem shelves, each central terminal 10 will support 60 subscriber links (i.e., 120 lines). The 10 cell arrangement in Figure 5A can therefore support up to 600 ISDN links or 1200 analogue lines, for example. Figure 5B illustrates a cellular type arrangement employing sectored cells to mitigate problems between adjacent central terminals 10. As with Figure 5A, the different type of hatch lines in Figure 5B illustrate different frequency sets. As in Figure 5A, Figure 5B represents three frequency sets (e.g., where: FS1 = F1, F4, F7, F10; FS2 = F2, F5, F8, F11; FS3 = F3, F6, F9, F12). However, in Figure 5B the cells are sectored by using a sectored central terminal (SCT) 13 which includes three central terminals 10, one for each sector S1, S2 and S3, with the transmissions for each of the three central terminals 10 being directed to the appropriate sector among S1, S2 and S3. This enables the number of subscribers per cell to be increased three fold, while still providing permanent fixed access for each subscriber terminal 20.

A seven cell repeat pattern is used such that for a cell operating on a given frequency, all six adjacent cells operating on the same frequency are allowed unique PN codes. This prevents adjacent cells from inadvertently decoding data.

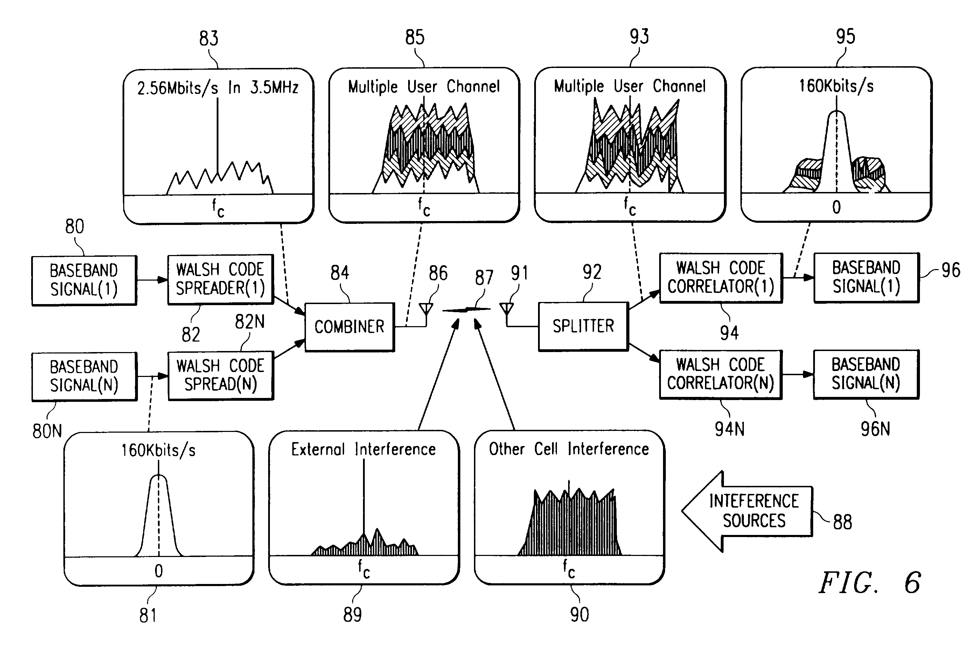

As mentioned above, each channel frequency can support 15 subscriber links. In this example, this is achieved using by multiplexing signals using a Code Division Multiplexed Access (CDMA) technique. Figure 6 gives a schematic overview of CDMA encoding and decoding.

In order to encode a CDMA signal, base band signals, for example the user signals for each respective subscriber link, are encoded at 80-80N into a 160ksymbols/sec baseband signal where each symbol represents 2 data bits (see, for example the signal represented at 81). This signal is then spread by a factor of 16 using a respective Walsh pseudo random noise (PN) code spreading function 82-82N to generate signals at an effective chip rate of 2.56Msymbols/sec in 3.5MHz. The signals for respective subscriber links are then combined and convened to radio frequency (RF) to give multiple user channel signals (e.g., 85) for transmission from the transmitting antenna 86.

During transmission, a transmitted signal will be subjected to interference sources 88, including external interference 89 and interference from other channels 90. Accordingly, by the time the CDMA signal is received at the receiving antenna 91, the multiple user channel signals may be distorted as is represented at 93.

In order to decode the signals for a given subscriber link from the received multiple user channel, a Walsh correlator 94-94N uses the same pseudo random noise (PN) code that was used for the encoding for each subscriber link to extract a signal (e.g, as represented at 95) for the respective received baseband signal 96-96N. It will be noted that the received signal will include some residual noise. However, unwanted noise can be removed using a low pass filter.

The key to CDMA is the application of orthogonal codes that allow the multiple user signals to be transmitted and received on the same frequency at the same time. To avoid the noise floor rising during spreading of the signals using PN codes as the number of user signals increases, Rademacher-Walsh codes are used to encode the spread user signals. Once the bit stream is orthogonally isolated using the Walsh codes, the signals for respective subscriber links do not interfere with each other.

Walsh codes are a mathematical set of sequences that have the function of "orthonormality". In other words, if any Walsh code is multiplied by any other Walsh code, the results are zero.

The following example will illustrate this using a four bit spreading code for ease of illustration, rather than the 16 bit spreading code preferred in practice.

| Incoming User Bit Stream | PN Code Spreading (x4) | Application of Walsh Codes | | Transmit Code |
|---|---|---|---|---|
| '1' | 1011 | 0000 | 0000 | |
| '0' | 1010 | 1100 | 1000 | |
| | | | | 0010 |
| '1' | 0110 | 1010 | 0100 | |
| '1' | 0111 | 1001 | 1110 | |

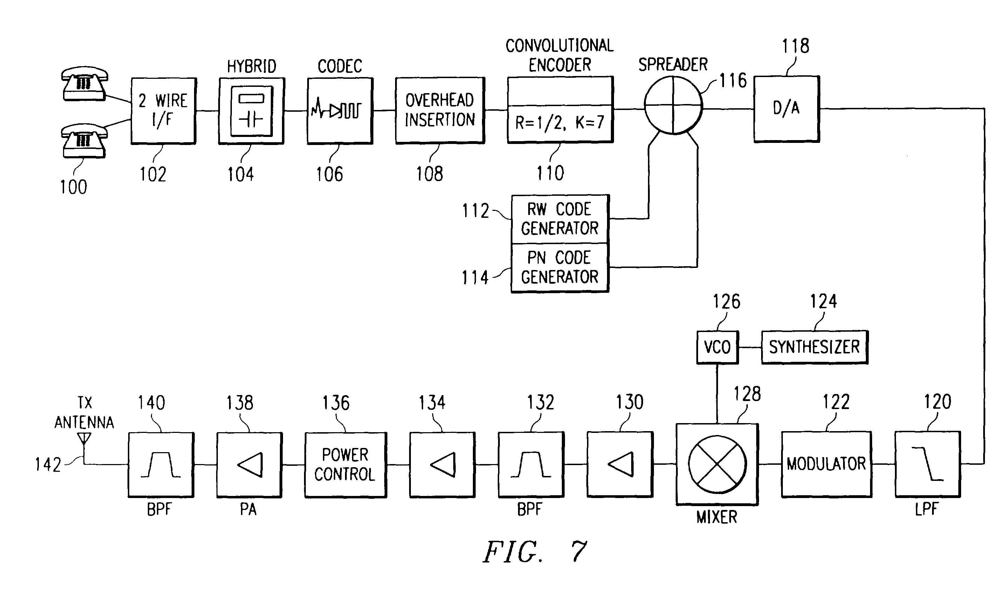

Figure 7 is a schematic diagram illustrating signal transmission processing stages as configured in a subscriber terminal 20 in the telecommunications system of Figure 1. The central terminal is also configured to perform equivalent signal transmission processing. In Figure 7, an analogue signal from one of a pair of telephones is passed via a two-wire interface 102 to a hybrid audio processing circuit 104 and then via a codec 106 to produce a digital signal into which an overhead channel including control information is inserted at 108. The resulting signal is processed by a convolutional encoder 110 before being passed to a spreader 116 to which the Radermacher-Walsh and PN codes are applied by a RW code generator 112 and PN Code generator 114, respectively. The resulting signals are passed via a digital to analogue converter 118. The digital to analogue converter 118 shapes the digital samples into an analogue waveform and provides a stage of baseband power control. The signals are then passed to a low pass filter 120 to be modulated in a modulator 122. The modulated signal from the modulator 122 is mixed with a signal generated by a voltage controlled oscillator 126 which is responsive to a synthesizer 160. The output of the mixer 128 is then amplified in a low noise amplifier 130 before being passed via a band pass filter 132. The output of the band pass filter 132 is further amplified in a further low noise amplifier 134, before being passed to power control circuitry 136. The output of the power control circuitry is further amplified in a further low noise amplifier 138 before being passed via a further band pass filter 140 and transmitted from the transmission antenna 142.

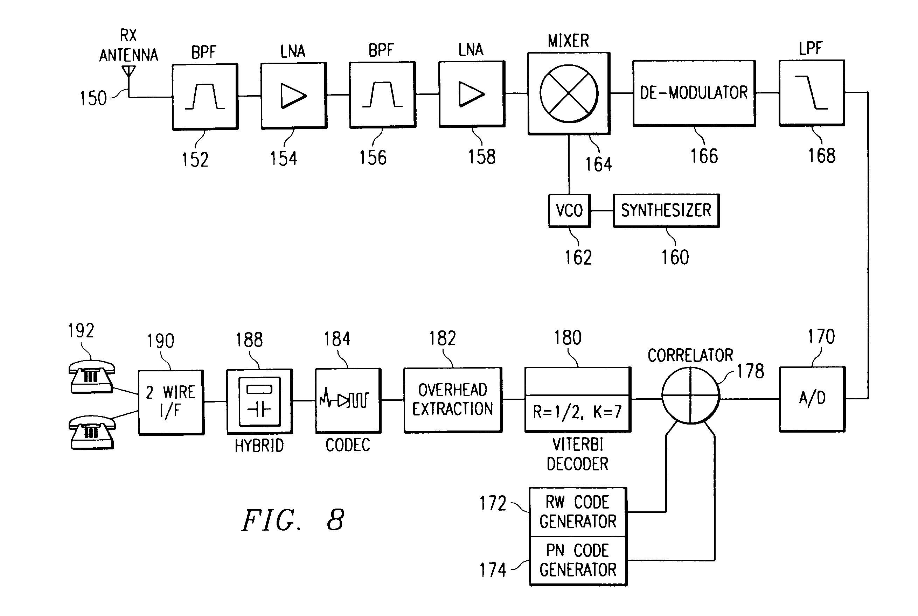

Figure 8 is a schematic diagram illustrating the equivalent signal reception processing stages as configured in a subscriber terminal 20 in the telecommunications system of Figure 1. The central terminal is also configured to perform equivalent signal reception processing. In Figure 8, signals received at a receiving antenna 150 are passed via a band pass filter 152 before being amplified in a low noise amplifier 154. The output of the amplifier 154 is then passed via a further band pass filter 156 before being further amplified by a further low noise amplifier 158. The output of the amplifier 158 is then passed to a mixer 164 where it is mixed with a signal generated by a voltage controlled oscillator 162 which is responsive to a synthesizer 160. The output of the mixer 164 is then passed via the de-modulator 166 and a low pass filter 168 before being passed to an analogue to digital converter 170. The digital output of the A/D converter 170 is then passed to a correlator 178, to which the same Radermacher-Walsh and PN codes used during transmission are applied by a RW code generator 172 (corresponding to the RW code generator 112) and a PN code generator 174 (corresponding to PN code generator 114), respectively. The output of the correlator is applied to a Viterbi decoder 180. The output of the Viterbi decoder 180 is then passed to an overhead extractor 182 for extracting the overhead channel information. The output of the overhead extractor 182 is then passed via a codec 184 and a hybrid circuit 188 to a two wire interface 190 where the resulting analogue signals are passed to a selected telephone 192.

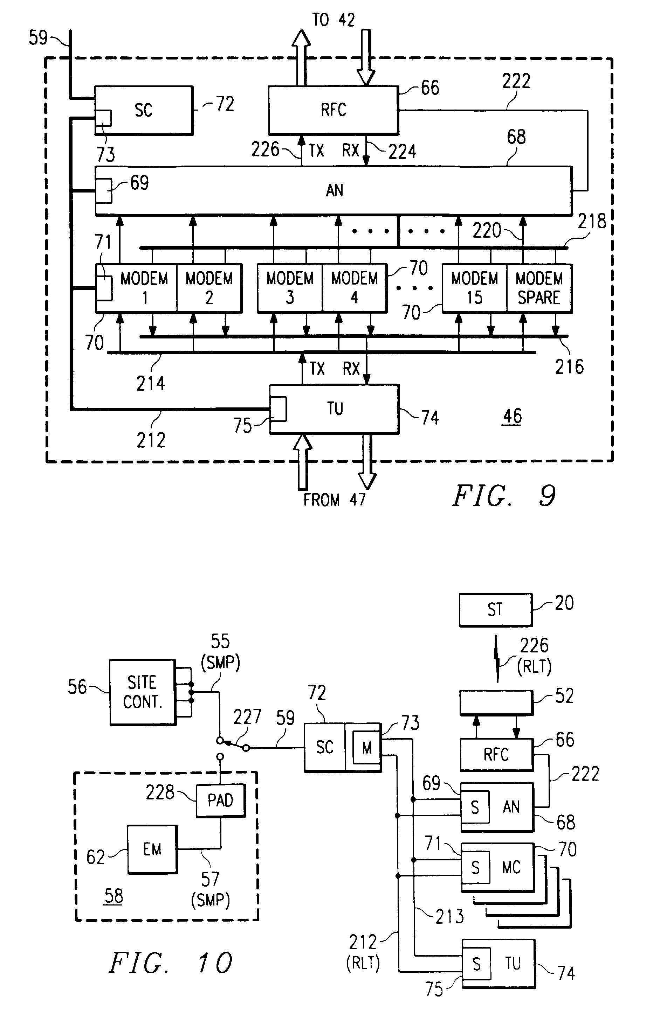

Figure 9 is a schematic diagram illustrating in more detail the configuration of one of the modem shelves 46. The shelf controller 72 manages the operation of the whole of the modem shelf and its daughter network sub-elements (NSEs). The shelf controller (SC) 72 is provided with a RS232 serial port 59 for connection to a site controller or to a pad for connection to a data network such as an X.25 data network. The shelf controller communicates control and data information via a backplane asynchronous bus 212 directly with the analogue card (AN) 68, the tributary unit card (TU) 74 and the modem cards (MC) 70. Other network sub-elements are connected via the modem cards. In a fully populated rack there will be four shelf controllers, one on each modem shelf. These four shelf controllers are configured to share the control of network service elements on other cards in the rack. The network service elements on the RF combiner shelf 42 are connected to the shelf controller backplane bus on each of the modem shelves. The shelf controller includes a master communications interface 73 for performing the communications functions mentioned above and other control functions. Each of the tributary card 74, the analogue card 68 and each modem card 70 includes a respective slave communications interface 74, 69 and 71, which manages the communications with the shelf controller 72. The RF card 66 is controlled from the analogue card 68, which is configured to provide the necessary control functions via the control path 222.

Also shown in Figure 9 are the signal paths from an interface to the public switched telephone network (e.g via lines 47 in Figure 3) and the interface to an RF combiner shelf 42.

The tributary unit 74 terminates the connection to the host public switched telephone network and handles the processing of telephony information for up to 15 subscriber terminals (up to 30 calls). The tributary unit 74 is 'on-line' in that it directly processes calls. The tributary unit 74 is also connected to a 2Mb/s time-multiplexed (timeslot) transmit bus 214 and 2Mb/s time-multiplexed (timeslot) receive bus 216 for transmit and receive calls, respectively.

The modems (1-15) on the modem cards 70 perform baseband signal processing of the transmit and receive signals including the convolution coding and spreading functions on the transmit signals, and the synchronisation recovery, de-spreading and error correction functions on the receive signals, as described earlier. Each modem is connected to the tributary unit 74 via the transmit and receive buses 214 and 216, and to the analogue card 68 via a dedicated connection 220 to one of a number of ports on the analogue card and via a digital CDMA RCV bus 218. Each of these dedicated connections includes multiplexed I, Q and control transmit paths.

The analogue card 68 performs A-D/D-A conversions, baseband filtering and vector summation of the 15 transmit signals from the modem cards. The analogue card 68 also scales the transmit signal power level according to high or low power levels. It is connected to the modem cards via the dedicated connections 220 and the digital CDMA RCV bus 218.

The RF card 66 generates the modulated transmit RF signals (at medium power level) and recovers and amplifies the baseband RF signal from the subscriber terminals 20. The RF card is 'on-line' in that it passes up to 30 calls simultaneously via the 15 available links, all on the same RF carrier. The RF card is connected to the analogue card via transmit and receive paths 226 and 224, respectively. The RF card is also connected to power amplifiers of the RF combiner shelf on the transmit side and to a low noise amplifier on the receive side. The power amplifiers (not shown) in the RF combiner shelf amplify the medium power output of the RF card 66 to an appropriate transmit power plus an amount to cover losses during signal combination and in the antenna feeder cable for the transmit signal. The low noise amplifier (not shown) is a low signal amplifier for overcoming losses in the antenna feeder etc. for the receive signal. The transmit carrier modulation is performed by the RF card 66 using an 'IQ modulator' at intermediate frequency and a single conversion to RF. The receive output of the RF card is at baseband in 'IQ' format as per the transmit input to the RF card.

Figure 10 is a schematic block diagram illustrating an example of various control protocols used for the transmission of control information between different parts of an example of a telecommunications system in accordance with the invention. It should be noted that Figure 10 is directed to the control signal paths, and accordingly, the telephone call signal paths are not included. Many of the features of Figure 10 have already been described above, and in this case the same reference numerals are used as before. Accordingly, these features will not be described again in detail.

A first protocol, called the Sub-system Management Processor (SMP) protocol, is used for communications between the shelf controller 72 and a site controller 56, or element manager 58, via lines 59 and 55, or 59 and 57, respectively. The first protocol is a balanced protocol with either party to a communication being able to initiate an exchange of information. The first protocol and the types of message which can be sent will be described in more detail below. As mentioned above, the shelf controller 72 is provided with an RS232 serial output for connection to a site controller 56. Accordingly, if a connection is provided instead to an element controller 62, represented schematically by the switch 227, a pad 228 for connection to an X.25 line, or the like, is used to convert between RS232 format and X.25 format.

A second protocol, called the Radio Link Termination (RLT) protocol, is used for passing control and data information via the control 212 and data 213 buses on the modem shelf. In addition, it should be noted that the same protocol is valid on the radio link 226 between the antenna 52 of the central terminal and the subscriber terminal(s) 20.

The second protocol is an unbalanced protocol with the microprocessor 73 in the shelf controller 72 acting as a busmaster (M) and the microcontrollers 69, 71 and 75 on the analogue card 68, the modem cards 70 and the tributary unit 74 acting as slaves.

The first protocol and the message structure will now be described in more detail.

The first protocol is used for information exchange in both directions between the site controller 56, or element controller 58 if connected instead, and a selected modem shelf controller 73. In the following description of the first protocol, the term management processor will be used for ease of reference to be either a site controller or an element manager, as the first message protocol is the same whether a site controller 56 is connected to a shelf controller 72 via an RS232 link 55, or an element manager 58 is connected to a shelf controller via an X.25 link 57 and the pad 228.

On initially establishing a connection between the management processor and the shelf controller, and preferably also at intervals during operation, an authentication process is undertaken. The authentication process is advantageous to stop potential intruders from extracting, distorting and corrupting the information within the telecommunications system. The details of the authentication process do not form part of the instant invention and will therefore not be described herein. However, it will be appreciated that any number of conventional authentication processes could be employed using the identities (e.g., serial numbers) of various components, transaction numbers, etc.

When it is desired to establish a communication, a call set up sequence is employed. An example of a call set up procedure where an management processor (MP) initiates a call to a shelf controller (SC) includes:

| MP Action/Response | | SC Action/Response |
|---|---|---|
| Set up call using SC address | -- > | Wait |
| Detect call setup | < -- | Set up call using MP address |
| Check received MP address | | |
| Drop call if incorrect | | |
| Send 'authentication' message | --> | Validate 'authentication' message |
| | | Send 'authentication reply' with SC data |
| and result of validation Check validation result and | <-- | Drop call if validation false |
| SC information. Drop call if information check is false | | |

The first protocol is message based. Individual messages tend to be relatively short and are blocked for transmission within message packets. Each such packet, which is variable in length, can carry one or more messages, all of which must be the same size. The maximum packet size, excluding the packet header, is chosen in the present example to be 260 bytes. With the 260 byte maximum packet length, the packet may contain either one 256 byte message, thirteen 16 byte messages, thirty-two 4 byte messages or fifty-two 1 byte messages.

A packet consists of the following fields:

| | | |
|---|---|---|
| SOP | Start of Packet | 3 bytes |
| CTRL | Control Byte | 1 byte |
| Messages | | variable |
| EOP | End of Packet | 3 bytes |
| CRC | Cyclic Redundancy Check | 2 bytes |

The purpose of the fields SOP, CTRL, EOP and CRC will now be explained in more detail.

### SOP

This defines the start of a packet and is represented by 3 unique bytes, 'AA' hex followed by 'EE' hex followed by 'AA' hex (i.e., in binary 1010 1010 1110 1110 1010 1010). It will be noted that for each nibble the MSB is 1 and the LSB is 0.

### CRTL

This defines the controls for the packet. The first two bits define the message size for the packet. The four possible sizes are as follows:

| | | |
|---|---|---|
| Type 1 | '0 0' | 1 byte |
| Type 2 | '0 1' | 4 bytes |
| Type 3 | '1 0' | 16 bytes |
| Type 4 | '1 1' | 256 bytes |

The third bit defines the packet direction: '0' is from the management processor to the shelf controller and '1' from the shelf controller to the management processor.

The last five bits are used to identify a packet sequence number (PSN). The packet sequence number represents a window used for flow control. The sender may send a number of packets, up to the window size (or a smaller number (e.g., five) if this is pre-arranged before a packet exchange), before receiving a packet acknowledgement from the receiver. The acknowledgement advances the window and allows the sender to overwrite the packets acknowledged.

A packet (PSN=n) received out of sequence, or with an error after application of the CRC, leads to an acknowledgement for packet sequence number (n-1). The acknowledgement packet indicates whether a CRC error was found. All packets after the acknowledged one then have to be retransmitted to avoid the complication of selective re-transmission.

From the values 0...31 which can be accommodated within the five bit sequence number, the value 0 is reserved for sequence number re-synchronisation (to be described later) so that the normal sequence numbers are 1, 2, 3,..30, 31, 1, 2....

A maximum number of outstanding acknowledgement packets is defined as a number which must be less than half the number of valid sequence numbers. For purposes of illustration only, in examples to be described below, a window size of five is assumed. The receiver is arranged to recognise the concept of the 'previous' window (the last window length's worth of message packets from the current expected sequence number) and the 'next' window (the next window length's worth of message packets).

Acknowledgement packets do not have a sequence number as such, rather the sequence number field will always be set at zero, and are always sent singly (i.e., they are not packaged with other messages). Acknowledgement packets are not acknowledged themselves and are not subject to the window limit, they can be sent at any time.

The immediate re-transmission of packets may be requested by setting the top bit of the packet acknowledgement data byte. This causes any remaining unacknowledged packets to be immediately re-transmitted rather than waiting for a time-out. The meaning of the rest of the acknowledgement remains unchanged.

After start-up and sometimes during operation, it is necessary to resynchronise the sequence numbers between the sender and the receiver. The special sequence number 0 is used for this purpose. The reception of the 0 sequence number resets the expected sequence number variable of the receiver. After the reset, it is no longer valid for packets from the previous window to be received until after the first acknowledgement has been sent.

The two message flow directions are completely independent. The state of the message flow from the management processor to the shelf controller is not allowed to affect the flow of messages in the other direction, and vice versa.

In the following, a number of examples of packet flow between a sender and receiver are illustrated. In the examples, a window size of five is chosen. This means that up to five packets may be sent without an acknowledgement. The receiver need not wait until five packets have been received, but can send an acknowledgement when it is convenient.
In the packet flow examples set out below, the sender is shown in the left column, the receiver in the right column. The arrows indicate the direction of packet flow.

### Example 1.

Normal state (acknowledgement after five packets).

| | | |
|---|---|---|
| 6 | -- > | |
| 7 | -- > | |
| 8 | -- > | |
| 9 | -- > | |
| 10 | -- > | |
| | < -- | 10 |

### Example 2

A packet (not the first after an acknowledgement) is lost. The receiver acknowledges up to the packet before the missing one and packets after the missing one are discarded. The sender re-sends the remaining packets after a timeout. The receiver can then send the acknowledgement on recognising the missing packet.

| | | |
|---|---|---|
| 6 | -- > | |
| 7 | -- > | |
| 8 | -¦ | |
| 9 | -- > | ignored |
| 10 | -- > | ignored |
| | < -- | 7 |
| Timeout... | | |
| 8 | -- > | |
| 9 | -- > | |
| 10 | -- > | |
| | < -- | 10 |

### Example 3

The first packet after an acknowledgement is lost. In this case the receiver does not send an acknowledgement but waits for the packets to be re-sent in due course.

| | | |
|---|---|---|
| 6 | -¦ | |
| 7 | -- > | ignored |
| 8 | -- > | ignored |
| 9 | -- > | ignored |
| 10 | -- > | ignored |
| Timeout. . . | | |
| 6 | -- > | |
| 7 | -- > | |
| 8 | -- > | |
| 9 | -- > | |
| 10 | -- > | |
| | < -- | 10 |

### Example 4

An acknowledgement is lost. In this case the receiver will get packets from the previous window which it had tried to acknowledge. The response is to resend the previous acknowledgement as soon as a packet from the previous window is received. It is possible that a plurality of acknowledgements will be sent as transmission is not instantaneous. The sender accounts for this and discards acknowledgements for packets for which acknowledgements have already been received.

| | | |
|---|---|---|
| 6 | -- > | |
| 7 | -- > | |
| 8 | -- > | |
| 9 | -- > | |
| 10 | -- > | |
| | ¦- | 10 |
| Timeout. . . | | |
| 6 | -- > | |
| | < -- | 10 |

### Example 5

A spurious packet is received, which is neither from the previous nor the next window. The receiver ignores the packet. It may be due to corruption, in which case the packet will be treated as lost and one of the above scenarios will come into play. It may also be due to a loss of synchronisation. If this is the case, the sender will detect this due to lack of acknowledgements and will then retransmit all the outstanding packets starting with the special sequence number 0.

| | | |
|---|---|---|
| 7 | -- > | |
| 8 | -- > | |
| 9 | --> | |
| 10 | -- > | |
| | <-- | 10 |
| 5 | -- > | ignore |

### EOP

This defines the end of the packet and is represented by three unique bytes, 'EE' hex followed by 'AA' hex followed by 'EE' hex (i.e., in binary 1110 1110 1010 1010 1110 1110). The initial combination of bytes of the end of packet sequence should start with a byte sequence which is invalid for data in the message fields. It will be noted that for each nibble the MSB is 1 and the LSB is 0.

The use of the end of packet field avoids the need to identify the total length of packets by indicating the number of bytes or the number of messages of a given size, for example.

### CRC

This is used to detect errors in both the packet header and the messages. A CRC error leads to the transmission of an acknowledgement for the last packet correctly received.

The structure of the message records will now be described in more detail. Each message record consists of a four byte header followed by the message data field.

The message header consists of: a message control byte; a sub-address byte; a message ID byte; and a task reference number byte.

One bit in the message control byte (e.g., the MSB) defines the type of message (e.g, '1' for command, '0' for report) and is used in combination with the message ID to define the message processing required. The remaining 7 bits of the message control byte define an element address to which the message refers (e.g, the address of a modem to which a message is directed).

The sub-address byte is a sub-address field within the element addressed by the message control byte.

The message ID byte defines the identity (equivalent to a command code) of the message.

The transaction identifier byte can be used to match up commands to a shelf controller with replies from it.

For any message capable of exceeding 256 bytes, the first byte of the data field contains a message sequence number (MSN) which is set to zero for each new message sent and is incremented for each 256-byte fragment (i.e. packet sending that message). The first data byte also contains a 'more' bit to indicate that the current package is not the last one for that message. The bit is set to zero for the last message fragment sent. If such a message is received out of sequence, the receiver sends a packet acknowledgement for the last packet correctly received. The sender will then resend all packets following the one which has been acknowledged.

All reports relating to specific events will be sent with an event sequence number (ESN) to distinguish them from other events. An event clear message can be used to identify an event to be cleared.

The length of the data field for a message is given in the packet control byte. All messages in a packet have the same length. In the present example the data field can be 1, 4, 16 or 156 bytes in length.

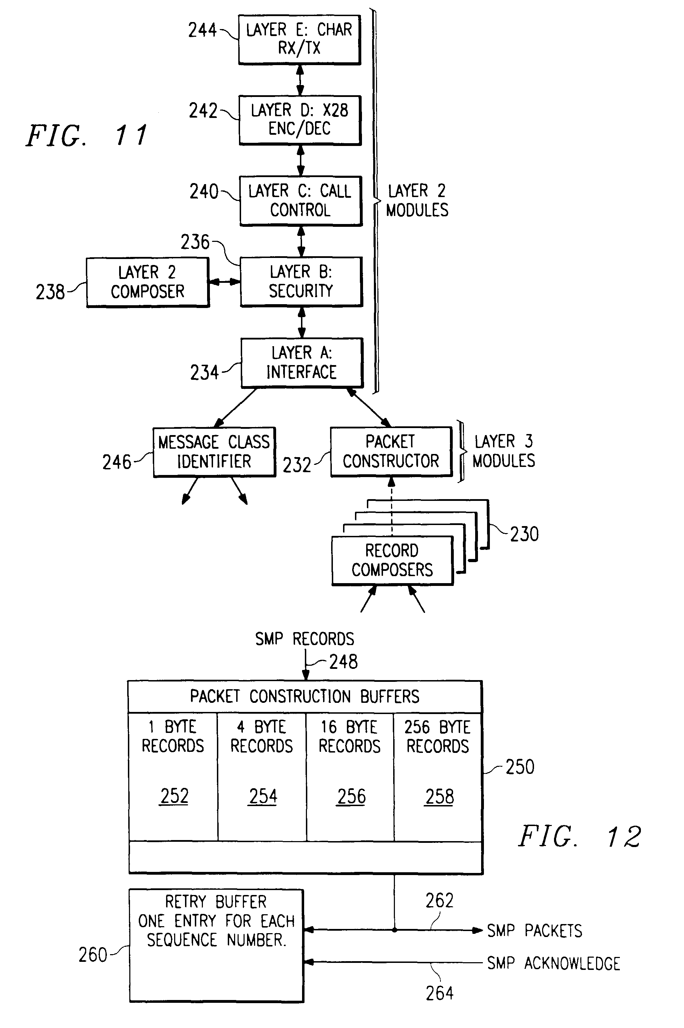

Figure 11 is a schematic block diagram illustrating the architecture of the message handling modules which are provided in the management processor and the shelf controller for constructing, sending and receiving messages.

The message handling modules are described with reference to Figure 11 for the situation where they are located in a shelf controller, which is communicating with an element controller via an X.28 format line to a pad and from there to the element controller via an X.25 format line. The same structure is used where there is an RS232 connection (i.e., an X.28 format line) directly to a site controller. Similarly, the same basic structure is employed in a site controller or element controller at the other end of the line. The processes performed in the message handling modules can be implemented on suitable processing hardware including, as appropriate, one or more microprocessors and/or special purpose hardware.

The message handling modules, and consequently the protocol can be thought of as having a plurality of different layers. The layers A-E illustrated in Figure 11 form part of a layer 2 protocol.

In Figure 11, layer E 244 is responsible for transmitting and receiving strings of characters representing messages to and from the transmission link. The transmitter is responsible for duplicating characters in message packets. The receiver contains a state machine that assembles incoming characters into messages. This layer performs particular functions, which are: initialise the layer, transmit a message, receive a message and accumulate messages. The last of these functions is responsible for accumulating bytes into messages. It handles both communications with the pad and command messages as well as message packets. Bytes that cannot be fitted into a message are discarded.

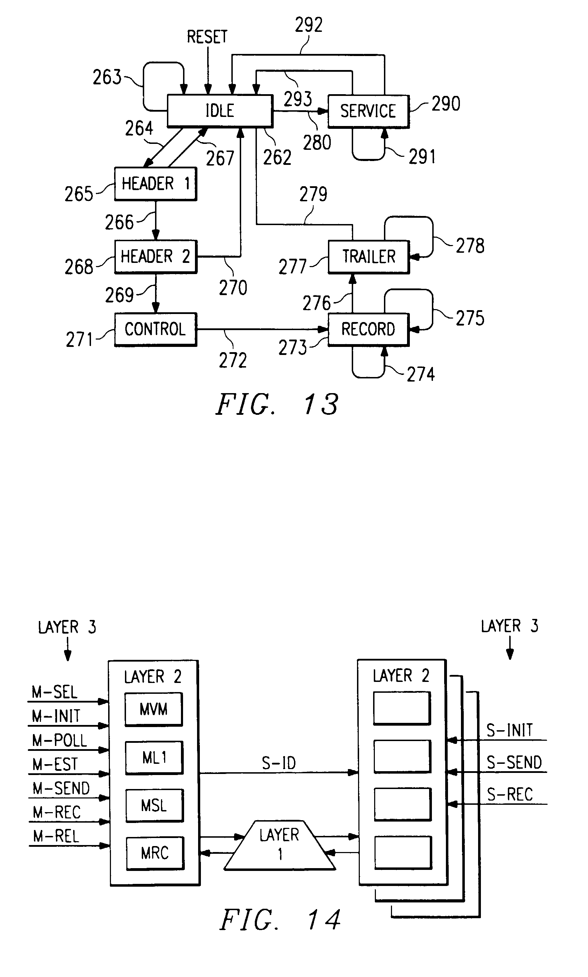

Figure 13 is a state diagram illustrating the process of accumulating bytes into packets in layer E.

In state 262 the process idles waiting for an input byte.

In state 262, if a received byte is a printable character, then control passes via 280 to state 290 where the process waits for a service signal.

In state 290, if a printable byte is received, then this is stored and control loops at 291. In state 290, if another control character is received, then all bytes are discarded and control passes via 292 to state 262. In state 291, if a carriage return or line feed byte is received, then this is discarded and a pad message is processed and control passes via 293 to state 262.

In state 262, if a received byte is a start of packet byte, then the byte is stored and control passes via 264 to state 265. In state 262, if a received byte is anything other than a start of packet byte or a printable character, the byte is discarded and control loops at 263.

In state 265, if a first header byte is received, then the byte is stored and control passes via 266 to state 268. In state 265, if any other byte is received, the all bytes are discarded and control passes via 267 back to state 262.

In state 268, if a second header byte is received, then the byte is stored and control passes via 269 to state 271. In state 268, if any other byte is received, the all bytes are discarded and control passes via 270 back to state 262.

In state 271, any byte received is stored, a message length is calculated, a new message condition is started and control passes to state 273.

In state 273, if a received byte does not complete a record, the byte is stored and control lops at 274. In state 273, if a received byte completes a record but no end of packet is received, then a new message record is started and control loops at 275. In state 273, if a received byte completes a record and an end of packet byte is received, then the byte is stored and control passes via 276 to state 277. In state 277, if a received byte does not complete a packet trailer, then the byte is stored and control loops at 278. If a received byte does complete a packet trailer, then the byte is stored and control passes via 279 to state 262. This completes the description of the state diagram of Figure 13.

Returning to Figure 11, layer D 242 is a layer which provides message composition/decomposition for messages in accordance with the X.28 format. Message packets are passed through this layer unchanged. This layer performs the following functions to provide encoding and decoding of pad to the X.28 standard. The functions are: send a wake-up string to the pad; send a message packet to the pad; decode an incoming pad message; send initialisation messages to the pad; send a call message to the pad; send a clear message to the pad; send a parameter request message to the pad to probe whether it is still there; and receive an incoming message packet.

Layer C 240 provides for call control. This layer maintains the connection with the transmission link (e.g., the pad 228) and makes network calls when message packet output is required. It also is responsible for breaking calls when they idle for too long. This layer performs the following functions to maintain the serial connection to the pad and to maintain the call through the X.25 network, namely: initialise the layer; perform background processing; respond to a call from layer D when a disconnect is detected; respond to a call by layer D when a connect is detected; respond to a call by layer D when a pad prompt is received; instruct the layer to create a connection with the management processor; send an application packet; respond to a call by layer D when communication with the pad is lost; receive an incoming message packet; and respond to a call by layer D to indicate receipt of the pad probe response.

The background processing function has the following tasks:
- If the connection with the pad is down, a wake-up string is sent to the pad once per second until a pad prompt is received, this then triggers the initialisation of the pad.
- If a call to the management processor is required and one is not currently in progress, a call is placed with the pad.
- Every twenty seconds, if the pad is recorded as being connected, a probe message is sent to the pad including a request for the state of a pad parameter. If a response to this is not received within a ten second time-out period, the pad is assumed to be disconnected.

Layer B 236 provides functions for performing the exchange of authentication messages between the shelf controller and the management processor whenever a call is connected. The functions are: initialise the layer; request the creation of an authenticated link with the management processor; respond to call by layer C when a call is connected; respond to a call by layer 3 when an authentication message is received; respond to a call by layer C when a call is disconnected; send a message packet; and receive a message packet.

The level 2 composer 238 provides encoding functions for authentication messages. The functions are: encode a shelf controller ID (SC ID) message; encode an 'authentication reply' message; and encode a 'packet acknowledgement' message.

Layer A 234 provides programming interface functions to layer 3 of the protocol stack. The functions are: initialise the layer; return TRUE if the layer can accept an output message; send an application packet; respond to call by layer B when a link is established; and receive a message packet.

The packet constructor 232 collects messages into packets for transmission and handles the re-transmission of packets in case of failure.

The record composers 230 are a series of modules which provide a layer between the encoded form of a message and the information which the message represents. These record composers actually form part of other subsystems that generate SMP messages and are only shown here to put the message handling modules into context.

The message class identifier 246 takes incoming packets and breaks them into their component messages (message records). Each message (message record) is then passed to an appropriate decoder module. This module is also arranged to track sequence numbers of received packets and generate appropriate acknowledgements. To do this it maintains in storage a list of received sequence numbers and the current window boundaries. Logic (typically implemented in software) then tracks the sequence numbers and interprets the sequences as described above to determine when to send an acknowledgement and what to send.

The packet constructor and the message class identifier form part of the layer 3 protocol.

Figure 12 illustrates the packet constructor module 232 in more detail. The data records for messages are assembled into packets by this packet constructor module. Incoming records at 248 are sorted into one of the four packet construction buffers 250 according to the data field size. Separate buffers 252, 254, 256 and 258 are provided for 1 byte, 4 byte, 16 byte and 156 byte data fields, respectively. When a buffer is full or in response to a predetermined transmit instruction, for example after a predetermined time has elapsed, the content of a buffer is sent over the transmission link and also copied to slot in a retry buffer 260 corresponding to the packet sequence number. There is one slot in the retry buffer for each sequence number. The retry buffer entry is cleared if an acknowledgement is received. If a retry instruction is received, the failed packet is re-transmitted directly from the retry buffer. If the retry buffer entry is not available to receive a packet from the packet construction buffers 150, or the number of packets awaiting transmission exceeds the size of the window, then the transfer and transmission is not performed. In this case, further requests to add message records are rejected until space becomes available. If a packet is not acknowledged within an acknowledgement timeout period, the packet is re-sent.

In this embodiment, the construction buffers 252, 254, 256 and 258 become full when they contain eighty-six 1 byte records, forty-three 4 byte records, fourteen 16 byte records or one 256 byte record.

The RLT protocol, which was introduced in the description of Figure 10 will now be described in more detail.

The RLT protocol is used for passing control and data information via the control 212 and data 213 buses on the modem shelf and is valid on the radio link from the antenna 52 of the central terminal and the subscriber terminal(s) 20.

The RLT protocol is an unbalanced protocol with the master communications interface 73 in the shelf controller 72 acting as a busmaster (M) and the slave communications interfaces 69, 71 and 75 on the analogue card, the modem cards and the tributary unit acting as slaves. In this example, the master communications functions in the shelf controller are shared between a 68000 series microprocessor and a Hitachi H8 microcontroller, which will be referred to as the master client and master server, respectively. Alternatively, the client and server functions could be implemented on one microcontroller or processor. The slave communications processing functions in the tributary unit are also shared between a 68000 series microprocessor and an H8 microcontroller. In the other slave units, the slave communications processing is performed in a Hitachi H8 microcontroller, which will hereinafter be referred to as the slave server.

The second protocol is based on three layers. Figure 14 is a schematic representation of this layered protocol structure.

The master communications end point functions performed at the third layer include the following functions.
- A master initialisation service process (M-INIT) sets up the master client part of the master communications end-point in the shelf controller. This service call must be executed before the other communications functions can be performed.
- A master initialisation poll process (M-POLL) initialises the master server part of the master communications end-point. This service process must be called before the following functions can be performed.
- A master establish process (M-EST) establishes a connection over the bus from the master to a slave in response to a slave address referencing a slave board. Messages can be sent and received once a connection has been established.
- A master send process (M-SEND) takes a message and sends it to a nominated slave over the bus as long as the connection to the slave has already been established.
   - A master receive process (M-REC) receives a message from a slave to be passed, for example, to a management processor.
   - A master release process (M-REL) releases a connection to a nominated slave preventing further send and receive functions from being performed.
   - A master select process (M-SEL) provides an addressing mechanism for the master to select one of the slaves with which to communicate.

The slave communications end-point functions performed at the third layer include the following functions.
- A slave initialisation service process (S-INIT) initialises the slave communications end-point. This service function must be called before any of the other functions can be performed.
- A slave send process (S-SEND) takes a message and sends it to the master, as long as the master has already established a connection to the slave.
- A slave receive process (S-REC)function receives a message from the master to be passed, for example, to a network service element addressed by the message.

The master communications end-point M includes the following functional components.
- A master VM component (MVM) provides a set of services for the management of storage to dynamically allocate memory for buffers, queues, semaphores and timers.
- A master layer 1 component (ML1) provides low level communication primitives for supporting byte transfer from the master server using a serial communication interface.
- A master status list component (MSL) holds the status of each link from the master to one of the slaves. This is updated when a connection is made, broken or released.
- A master retry count component (MRC) tracks the number of retires attempted in master to slave layer 2 communications. If this exceeds the limits for layer 2, the master breaks the connection with the slave.

The slave communications end-point M includes substantially the same functional components as the master.

The master layer 1 component (ML1) provides the following level 1 functions.
- A master layer 1 initialisation process initialises the layer 1 communications system. No layer 1 communications can take place until this process has been invoked.
- A master layer 1 byte-output process outputs a byte out of a serial communications port and waits for an acknowledgement from the receiver. If no acknowledgement is forthcoming, then a failure is registered.
- A master layer 1 data-out process is similar to the byte output process except that more than one byte can be transferred.
- A master layer 1 address-out process is similar to the byte output process except that the source byte is output with a bit set to indicate that this relates to a multiprocessor address rather than a data byte.
- A master layer 1 data-in process waits for a specified number of bytes to be received on the communications port. If less than the required number of bytes is received, then a failure is registered.

The master VM component (MVM) provides the following functions:-
- A master VM initialisation process initialises the master VM component. This must be called before any other VM service.
- A master VM get-message process removes a message from one of the queues held by the VM component.
- A master VM put-message process places a message on one of the queues held by the VM component.
- A master VM queue-full process indicates whether a selected queue is full.
- A master VM get-buffer process allows a buffer to be requested from a buffer pool held by the VM component.
- A master VM give-buffer process allows a buffer requested by the get-buffer process to be returned to the pool.
- A master VM get-semaphore process allows a semaphore held by the VM component to be set.
- A master VM give-semaphore process allows a semaphore set by the get-semaphore process to be cleared.
- A master VM set-timer process sets a time-out period for one of the timers held by the master VM component. A flag is set by the master VM component when the timer expires.
- A master VM add-timer function process registers an application function with the master VM component to be called at a particular time.

The master and the slaves both use VM components to provide buffers, queues, semaphores and timers in order to permit the transfer of messages. The operation of the second protocol will be illustrated by reference to specific examples below:

The first example relates to the establishment of a connection from a master to a slave.

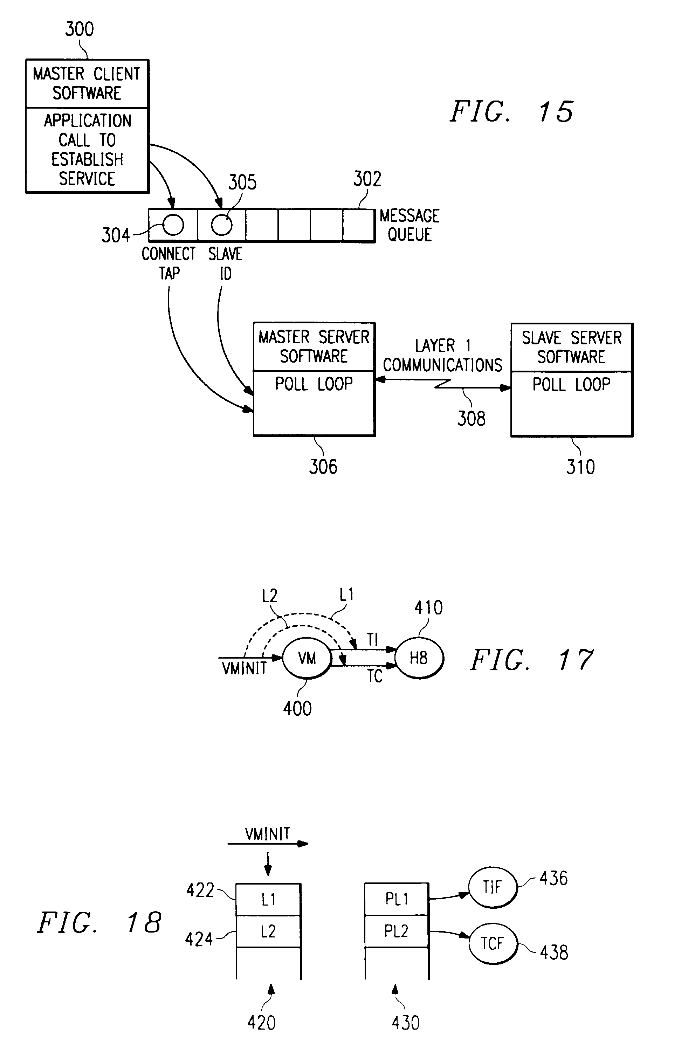

To connect the shelf controller master to one of the slaves, the shelf controller invokes the master establish process in the master end-point and supplies the link address of the slave (S-ID) with which the connection should be made. Figure 15 illustrates how the master 300 maintains a message queue 302 to store requests such as an establish request, and how these requests are handled.

Invoking the master establish process has the effect of placing a connect tag 304 onto the message queue along with the address (S-ID) 305 of the slave with which the connection is to be made. The work queue is shared between the client and server portions of the master end-point allowing a master client application to place a connect tag onto the message queue via the establish process and the master server to remove it and act upon it as part of the server poll processes. With this mixed client and server implementation, poll processes are introduced between the master and slave as set out below:
- A master poll process 306 is provided in the master server and is called repeatedly on the master server. This services all of the requests placed in the message queue by the client.
- A slave poll process 310 is provided in the slave server and similarly is called repeatedly on the slave server.

When called, the master poll process checks the message queue for requests and in this case extracts a connect tag and the slave address from it. The pool process then sends out a connect command 308 to the nominated slave and awaits a response. If the response is valid, the status of the link to the selected slave is changed to 'connected', allowing the send and retrieve services to be used.

The second example relates to the sending of a message from the master to a nominated and connected slave. This is illustrated in Figure 16.

In order to send a message from the master to the nominated and connected slave, an application invokes the master send process 312. The send process requests a buffer 323 from the master VM component buffers 324 and copies the message to be sent to it. It then places a send tag 316 and the buffer number 318 on the work queue 314 for a subsequent poll call to deal with.

The master poll process 306 extracts the send tag 316 and the buffer number 318 from the message queue 314. It uses the buffer number 318 to extract 326 the message from the buffer 323 and then sends 330 the message to the nominated slave.

The message is received at the slave end-point under interrupt. At the next call to the slave poll process 310, a buffer 343 is requested from the slave VM component buffers 344 to hold the incoming message. The slave poll process 310 then places the message into the buffer 343 and puts a receive tag 336 and the buffer number 338 onto the slave receive queue 334. Messages can be received and put into the slave receive queue 334 until either the queue is full or no further buffers are available in the slave VM component buffers 344. Once a message has been transmitted and successfully received, the master gives its message buffer back to the master VM component for re-use using the master give-buffer process.

The message is delivered to the application when the application invokes a slave receive process 346. The receive process 346 checks the receive queue 334 for entries and, on finding one, extracts the buffer number 338 and reads the incoming message from the buffer 343. The buffer 343 is then returned to the slave VM component for re-use.

The sequence for sending a message from the slave to the master is similar except that the slave holds a separate send queue, rather than placing send and receive tags on the message queue. Send requests are placed on the send queue by client calls to the slave send process. When a slave receives a ready-to-receive command from the master, the slave poll process removes a send request and a buffer number from the send queue, gets the message from the slave VM buffer and transmits it to the master. At the end of the sequence it returns the buffer to the slave VM component for reuse.

The second protocol uses a sequence number, which alternates between 1 and 0, for passing messages between the master and the slave. An example of a message exchange is set out below.
Initially an exchange between the master and the slave establishes a link as part of a level 2 process.

| Master | | Slave |
|---|---|---|
| Poll(address) | -- > | |
| | < -- | Response(data or not) |
| Reset | -- > | |
| | < -- | Reset response |

Then a data message exchange takes place as part of a level 1 process.

| Master | | Slave |
|---|---|---|
| SEND(0) data | -- > | |
| | <-- | SRR(1) |
| MRR(0) | -- > | |
| | < -- | DATA(1) |

In this process the 1 or 0 between brackets associated with each message forms the sequence number, which can be represented by a single bit which is switched by a recipient of a message before a reply is sent in response to the successful receipt of the message. If the message is not received correctly, then the sequence number is not switched. This is illustrated in the following example.

| Master | | Slave |
|---|---|---|
| SEND(0) data | -- > | |
| | <-- | SRR(1) |
| MRR(1) | -- > | |
| | < -- | SRR(0) |
| MRR(1) | -- > | |
| | < -- | DATA(0) |

In the sequence shown immediately above, the SRR message transmitted by the slave was not correctly received by the master. Accordingly, a response was sent without changing the sequence number. This then caused the slave to re-send the SRR message and the sequence proceeds as before but with the sequence numbers now inverted with respect to the first example.

In practice the sequence number is provided twice in a message byte, in two bits, although it could alternatively be provided only once, in one bit.

In order to provide a hardware independent environment for programming the functions required in the telecommunication system including, for example, functions as described above, a VM (virtual machine) module is provided. The VM module provides a compact operating system for simple embedded applications where a real time multi-tasking operating system is considered too large or overly complex. The VM module is object-based and provides a set of services which enables software to be written which is microcontroller or microprocessor architecture independent and it provides a basic operating system frame work.

Figure 17 illustrates the initialisation of the VM module 400, in this case on an H8 microcontroller.

To access operating system services, a VM class object is declared during program initialisation (VM_Init) and a pointer to the initialised object is then passed to each VM service as it is invoked. When invoking VM_Init, object parameters (pointers to separate object modules) are supplied to the VM module to identify hardware specific functions. For example, parameters represented by links L1 and L2 can be supplied for identifying objects defining, for example, timer interrupt (TI) and timer clear (TC) functions for interfacing with the H8 hardware.

Figure 18 provides an alternative representation of the operation indicated in Figure 17. In particular, the VM_Init operation is associated with parameters 420 including L1 422 and L2 424 parameters. Pointers PL1 432 and PL2 434 are stored in registers 430 in the VM module to point to objects representative of the timer interrupt function TIF 436 and timer clear function TCF 438. Thus, at an initialisation stage, a VM_Init service is provided which sets up the VM object. It accepts two parameters called InitFunc (i.e. L1) and ClrFunc (i.e. L2) which are designed to abstract VM from the source of its timer interrupts. The basis of operation of the VM module is by means of timer interrupts where a routine called VM timer is executed by the processor every timer interrupt. For example, in the case of an H8 microcontroller, the H8 free running timer is used as an interrupt source. The VM timer is responsible for the maintenance of the VM object and for executing all registered functions and timers. The parameter InitFunc gives VM a function it can call to set up a timer interrupt on the current target processor. ClrFunc gives a function that will clear a timer interrupt once it has occurred. As a result of this, it will appreciated that the VM module can be ported to another microprocessor or microcontroller with no more than re-writing of the InitFunc or ClrFunc functions for the new processor.

The VM module is sufficiently general in its application that it can be used in a number of different operating modes.

In a first, single-processor-single-instance mode, a single instantiation of the VM module supports software on a single processor, allowing all application functions to share common VM resources. This is the typical and normal use of the VM module, providing a management system for simple embedded applications. The VM module is used in this mode for most of the software functions implemented in the H8 controllers described above.

In an alternative, dual-processor-single-instance mode, two processors on a card (for example on the tributary unit and the shelf controller cards) can be used to communicate with each other in a controlled fashion, and to gain access to common card resources. The VM module is instantiated on one processor and then installed in a region of shared memory. After installation, either processor may invoke VM services. The VM module then acts as an arbiter and resource monitor.

In a third, single-processor-multiple-instance mode, more than one VM module may be created allowing each to manage a block of resources which are not available to the other VM modules. This is useful in situations where application functions require access to system resources, but the resources must be partitioned in some way. Allocating segments of the total resource to different instantiations of the VM module and different VM objects to function sets, partitioning of resources can be achieved quickly and without extra code.

The VM module provides the following basic system services, some of which have been described in part above. The resource limits for the basic system services may be defined on an application by application basis.

The VM module provides an arrange of message queues which may be used to communicate data or commands between processes or functions. The VM module presents a series of functions to manipulate its queues, each of which is an atomic operation and thus may not be interrupted. In single processor applications this is achieved by the use of monitor functions. In dual processor applications, the VM module uses some of its semaphores to protect resources. The following services are provided for queue manipulation.

### 1. VM_PutMessage and VM_PutMessageNoSem

VM_PutMessage places a record in named VM queue returning TRUE or FALSE result depending on the success of the operation. FALSE is returned if the queue is currently full. VM_PutMessage is a blocking call and will wait for access to the message queue if it is in use by another process. For non-blocking applications a further accessors is provided called VM_PutMessageNoSem which returns FALSE if access could not be gained to the queue. Both services offer a priority system where a message can be classified as HIGH or LOW priority. LOW priority messages are placed at the tail of the queue whereas high priority messages are placed at the head.

### 2. VM_GetMessage and VM_GetMessageNoSem

VM_GetMessage retrieves a record from the head of the name VM queue, returning TRUE or FALSE depending on the success of the operation. VM implements true queuing, where the order of items placed on the queue is retained. FALSE is returned if there were no items on the queue to receive. VM_GetMessage is a blocking call and will wait for access to the message queue if it is in use by another process. For non-blocking applications VM_GetMessageNoSem is provided, which returns FALSE if access could not be gained to the queue.

### 3. VM_PeekMessage, VM_NextMessage and VM_QFull

VM_PeekMessage behaves in a similar way to VM_GetMessage, except that a copy of the item at the head of the queue is retrieved without removing the item from the queue. This is useful in applications where some form of look-ahead functionality is required. VM_NextMessage is similar in operation to VM_GetMessage, except that no message is returned to the user from the queue. Instead, the current head of queue is moved to the tail, and the next item becomes the head. This can be accessed with VM_GetMessage. This function treats the queue as a circular buffer. VM_QFull is a predicate available to application programs. It gives the status of the named VM queue, indicating whether or not it is full.

### 4. VM_ReserveQSpace and VM_UnReserveQSpace

VM_ReserveQSpace acts on a specified VM queue and allows an application to reserve one place in the VM queue. To all other accessing processes, the VM queue appears one place shorter and the caller is assured of one queue space. VM_UnReserveQSpace performs the reciprocal function by freeing up the reserved queue space. These functions are useful in applications where a process removes an item from the queue and may wish to return it as some point. Reserving queue space before removing an item guarantees that space will be available to replace it later.

The VM module provides an array of data or message buffers, the resource limits of which may be specified at program build time. Each VM buffer has a number and this is used as the currency with which to invoke operations involving particular buffers. The following buffer operations are supported by the VM module.

### 1. VM_GetBuffer and VM_GetBufferNoSem

VM_GetBuffer allocates a particular buffer for use by a process by returning a buffer number. A TRUE or FALSE result is returned to the caller indicating the success of the operation. The VM object will not allocate this particular buffer again until it is returned to the system. VM_GetBuffer is a blocking operation and will wait for access to the VM buffers. A similar service, VM_GetBufferNoSem, is provided for non-blocking applications which returns a FALSE result if access cannot be gained to the VM buffer resources.

### 2. VM_GiveBuffer and VM_GiveBufferNoSem

VM_GiveBuffer returns a named buffer to the VM object for subsequent reallocation. VM_GiveBuffer is a blocking call which waits for access to the VM buffer resources. A similar service is provided for non-blocking applications called VM_GiveBufferNoSem which returns a FALSE result if access cannot be gained to the VM buffers.

Simple tasking support is provided by the VM module allowing functions to be registered with the VM object during program execution. An interval time is specified as each function is registered and the VM module executes each function periodically thereafter. This service is provided by the VM_AddtimerFn service which may be called at any point during program execution. The number of functions which can be registered with the VM module can be specified at program compile time.

The VM module supports an array of timers which are available for application software use. The resolution of the timers and the number of timer concurrently supported can be determined at program compile time. A VLM_TimerSet service is provided which starts countdown of a named VM timer. A set of broadcast flags in the VM object signal when a particular timer has expired.

The VM module supports an array of client server semaphores which can be used to protect system resources in dual processor or multi-process applications. Two services are provided to manage semaphores: VM_GetSem and VM_PutSem. Each VM semaphore is referenced by its number.

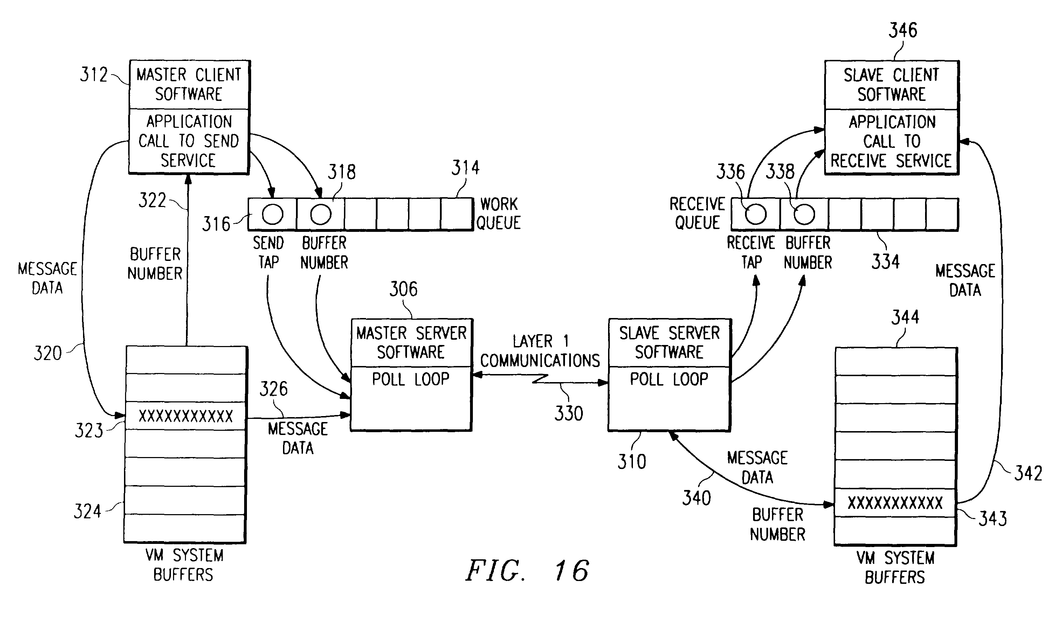

Figure 19 illustrates the tributary unit microcontroller software environment which is implemented using the VM dual processor shared resource mode.

The tributary unit microcontroller supports signalling on the associated 68000 microcomputer by maintaining the RLT communications bus slave end-point. and providing notification of important on-board events. In particular, the software forms the following functions:
- maintenance of the RLT communications bus slave end-point;
- servicing of a watchdog function for the tributary unit H8;
- servicing of requests from the 6800 microprocessor for the illumination or extinguishing of LEDs on the cards; and
- maintaining a watchdog function to be serviced by the 68000 microprocessor.

As can be seen in Figure 19, the architecture is modelled on a set of interacting objects, each providing a number of services. The Figure 19 diagram shows one instance of a tributary unit controller object in the system and the external and peer instances with which it interacts. Thus, the tributary unit controller 440 interacts directly with shared memory 448 and with an RLT slave object 442. The shelf controller 444 interacts via the RLT slave end-point object. Tributary unit signalling 446 interacts with the shared memory 448 and the RLT slave 442.

The tributary unit controller represents the main card controller. It provides two basic services, TU_Init and TU_Poll, which at the highest level can service all card functions.

The TU_Init service programs all H8 I/O ports, sets up the RLT slave communications end point 442 and registers a number of functions to be executed periodically on timer interrupt, supporting the 68000 signalling 446 and monitoring notifiable event conditions on the card.

The TU_Init service initialised a slave class which provides to the RLT communications link to the shelf controller card 444. This is performed by a slave service called SLAVE_Init. An associated service SLAVE_Poll is called from the tributary unit Poll service to support the link.

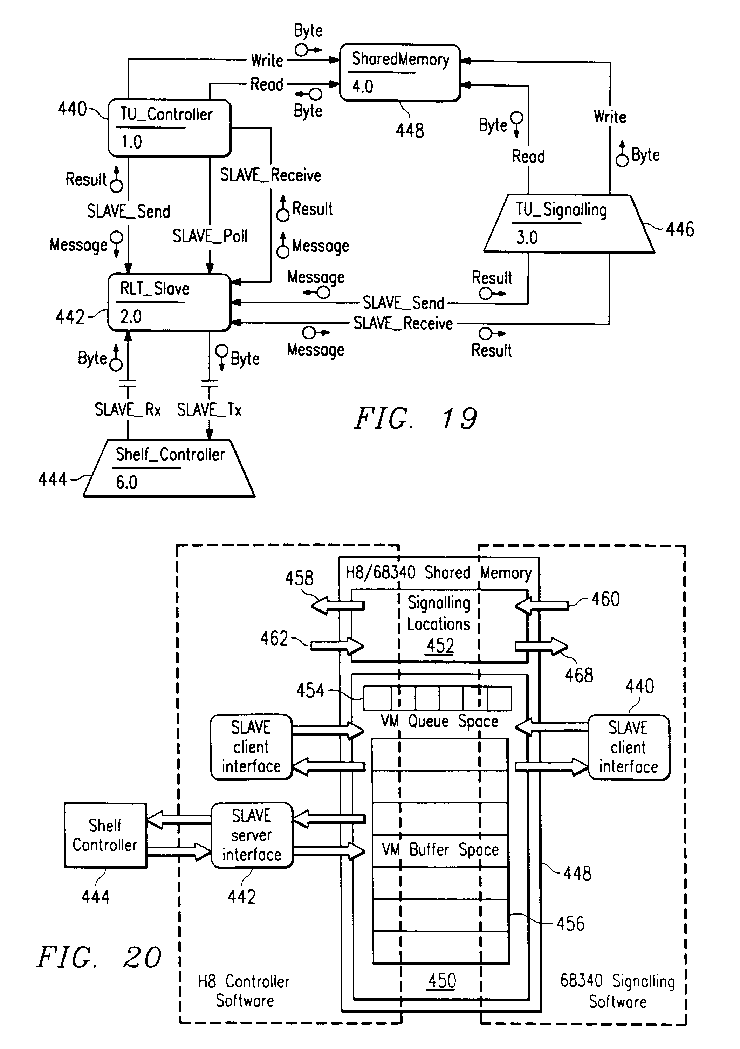

The H8 microcontroller and the 68000 signalling processor 446 communicate through a region of shared memory 448. This is organised into two blocks 450 and 452. At the base of the shared region, a VM object is installed which manages the queues 454, timers and buffers 456 required for the slave object communication services. This allows both the H8 microcontroller and the 68000 microprocessor to declare slave objects and attach them to the same VM object in shared memory 448. In this way SLAVE_Send and SLAVE_Receive services can be called from the H8 microcontroller and the 68000 processor applications. At the time of the shared region a series of locations 452 are used to send status from the 68000 microprocessor to the H8 microcontroller directly via ports 458 and 460. These locations are protected by to semaphore locations which avoid possible contention. Figure 20 illustrates the date flows through shared memory.

The tributary unit shared memory block 450 contains the set of signalling locations outlined above and a VM object which the H8 application and the tributary unit 68000 microprocessor used for basic buffer, queue and timer allocation.

The VM object is used primarily by the slave class for managing RLT communications bus messages. Sharing a VM object allows an H8 and a 68000 slave client interface to be maintained with a single server on the H8 microcontroller. This allows a SLAVE_Send and SLAVE_Receive service request to be evoked from either the microcontroller software or the 68000 microprocessor signalling software. Consequently, RLT messages from and to the shelf controller are available directly at the client interface for which they were intended.

A shelf controller_poll service is responsible for shelf controller card management and the maintenance of the communication links with the other cards on the RLT bus and the RF combiner.

A master_poll and shelf controller RFCCheck services are evoked to support communications with other cards.

At the lowest level, both master and shelf controller classes operate using the services of the VM class. The VM module provides services for controlled buffer, time, semaphore and queue allocations. It also allows individual functions to be registered and executed under interrupt at a given rate. The master class makes use of the buffer and queue allocation services, while the shelf controller class registers a series of functions with the VM module as part of its shelf controller Init service. The following functions are registered.
1. Shelf controller 68000 watchdog. This function is called every 1.4 seconds and checks the location in shared memory between the H8 microcontroller and the 68000 microprocessor. As part of its card maintenance function, the 68000 microprocessor changes the value of this location to give the H8 microcontroller an indication that an application is still active. If the H8 microcontroller detects no change in the value of the location, it re-boots the shelf controller card.
2. Shelf controller 68000 LED write. This function is called every 8ms and echoes the bit pattern found in a location in shared memory to the shelf controller card LEDs. This location allows the 68000 microprocessor to share access to the LEDs with the H8 microcontroller.
3. Shelf controller - PSUAcqBegin. This function configures the H8 analogue to digital converter to begin an acquisition sequence. The H8 then samples the on board PSU and checks that the voltage lies within a specific tolerance band. If the sample voltage is not within range, a PSU failure event will be generated. This will be filtered and may result in a message being sent to the 68000 microprocessor.

Although a particular embodiment has been described herein, it will be appreciated that the invention is not limited thereto and that many modifications and additions thereto may be made within the scope of the invention.

## Claims

1. A machine control module for initialising a portable operating system on a processor, the machine control module comprising a processor independent kernel object (400, 420, 430) and one or more processor specific objects (436, 438), said kernel object being arranged to be responsive on initialisation to parameters (L1, L2) identifying a processor specific object to establish a link from said kernel object to said processor specific object for configuring the kernel object to the processor.

2. A module according to claim 1, wherein at least one processor specific object defines an interrupt function (436) for said processor.

3. A module according to claim 1 or claim 2, wherein said kernel object is arranged to be responsive to parameters identifying a processor specific object to establish a pointer table (430) containing pointers to said processor specific object.

4. A module according to any preceding claim comprising a processor specific object for a microcontroller.

5. A module according to any preceding claim comprising a processor specific object for a microprocessor.

6. A module according to any preceding claim operable in a multi-processor operating environment.

7. A module according to claim 6, wherein said module is arranged to establish a common memory address space (448) for said plurality of the processors.

8. A module according to claim 7, wherein said address space comprises a first area (450) for queues (454) and buffers (456) and a second area (452) for signalling locations and semaphores.

9. A module according to claim 7 or claim 8, which is arranged to be responsive to multiple instantiations to establish a separate memory partition for each instance.

10. A module according to any preceding claim, which module forms an operating system for a processor when initialised thereon.

11. A method of initialising a portable operating system, the method comprising supplying parameters (L1, L2) identifying a processor specific object (436, 438) to a processor independent kernel object (400, 420, 430) to establish a link from said kernel object to said processor specific object, whereby said processor specific object configures said processor independent kernel object to said processor.

12. A method according to claim 11 comprising a step of defining an interrupt function (436) for said processor by at least one processor specific object.

13. A method according to claim 11 or claim 12 comprising a step of said kernel object responding to parameters identifying a processor specific object to establish a pointer table containing pointers to said processor specific object.

14. A method according to any one of claims 11 to 13 comprising a step of providing a processor specific object for a microcontroller.

15. A method according to any one of claims 11 to 14 comprising a step of providing a processor specific object for a microprocessor.

16. A method according to any one of claims 11 to 15 in a multi-processor operating environment.

17. A method according to claim 16, wherein said module establishes a common memory address space (448) for said plurality of the processors.

18. A method according to claim 17, wherein said address space comprises a first area (450) for queues (454) and buffers (456) and a second area (452) for signalling locations and semaphores.

19. A method according to claim 17 or claim 18 comprising a step of responding to multiple instantiations to establish a separate memory partition for each instance.

20. A method according to any one of claims 11 to 19, for initialising a portable operating system on a processor (410) in a telecommunications system element, which telecommunications system element (46, 72) comprises one or more processors for passing messages to and from said element.

21. A telecommunications system element (46, 72) comprising one or more processors for passing messages to and from said element (46, 72) and a portable operating system formed by a machine control module according to any one of claims 1 to 10 initialised on at least one said processor.

## Patentansprüche

1. Maschinensteuermodul für die Initialisierung eines tragbaren Betriebssystems an einem Prozessor, wobei der Maschinensteuermodul einen prozessorunabhängigen Kernteil (400, 420, 430) und einen oder mehrere prozessorspezifische Teile (436, 438) aufweist, wobei der Kernteil so ausgelegt ist, daß er bei der Initialisierung auf Parameter (L1, L2) anspricht, die einen prozessorspezifischen Teil kennzeichnen, um eine Verknüpfung von dem Kernteil zu dem prozessorspezifischen Teil herzustellen, um den Kernteil für den Prozessor zu konfigurieren.

2. Modul nach Anspruch 1, wobei zumindest ein prozessorspezifischer Teil eine Interrupt-Funktion (436) für die Prozessoren definiert.

3. Modul nach Anspruch 1 oder 2, wobei der Kernteil so ausgelegt ist, daß er auf Parameter anspricht, die einen prozessorspezifischen Teil identifizieren, um eine Anzeigetabelle (430) bereitzustellen, die Anzeigen bzw. Zeiger auf den prozessorspezifischen Teil enthält.

4. Modul nach einem der vorstehenden Ansprüche mit einem prozessorspezifischen Teil für einen Mikrocontroler.

5. Modul nach einem der vorstehenden Ansprüche mit einem prozessorspezifischen Teil für einen Mikroprozessor.

6. Modul nach einem der vorstehenden Ansprüche, welcher in einer Umgebung mit Multiprozessorbetrieb betreibbar ist.

7. Modul nach Anspruch 6, wobei der Modul so ausgelegt ist, daß er einen gemeinsamen Speicheradressraum (448) für die Mehrzahl von Prozessoren bereitstellt.

8. Modul nach Anspruch 7, wobei der Adressraum einen ersten Bereich (450) für Bearbeitungsschlangen (454) und Puffer (456) sowie einen zweiten Bereich (452) für das Anzeigen bzw. Signalisieren von Positionen und Zeichenträgern, aufweist.

9. Modul nach Anspruch 7 oder 8, welcher so ausgelegt ist, daß er auf mehrfaches Auftreten von Ereignissen reagiert, um getrennte Speicherbereiche für jedes Auftreten bereitzustellen.

10. Modul nach einem der vorstehenden Ansprüche, wobei der Modul ein Betriebssystem für einen Prozessor bildet, wenn er für diesen bzw. auf diesem initialisiert ist.

11. Verfahren zur Initialisierung eines tragbaren Betriebssystems, wobei das Verfahren die Schritte aufweist: Liefern von Parametern (L1, L2), welche einen prozessorspezifischen Teil (436, 438) für einen prozessorunabhängigen Kernteil (400, 420, 430) identifizieren, um eine 436, 438 Verknüpfung von dem Kernteil zu dem prozessorspezifischen Teil bereitzustellen, wobei der prozessorspezifische Teil den prozessorunabhängigen Kernteil für den Prozessor konfiguriert.

12. Verfahren nach Anspruch 11 mit dem Schritt, daß durch zumindest einen prozessorspezifischen Teil eine Interrupt-Funktion (436) für den Prozessor definiert wird.

13. Verfahren nach Anspruch 11 oder 12 mit dem Schritt, daß der Kernteil auf Parameter anspricht, die einen prozessorspezifischen Teil identifizieren, um eine Anzeigetafel bereitzustellen, die Zeiger bzw. Hinweise auf den prozessorspezifischen Teil enthält.

14. Verfahren nach einem der Ansprüche 11 bis 13 mit dem Schritt, daß ein prozessorspezifischer Teil für einen Mikrocontroler bereitgestellt wird.

15. Verfahren nach einem der Ansprüche 11 bis 14, mit dem Schritt, daß ein prozessorspezifischer Teil für einen Mikroprozessor bereitgestellt wird.

16. Verfahren nach einem der Ansprüche 11 bis 15 in einer Umgebung mit Mehrprozessorbetrieb.

17. Verfahren nach Anspruch 16, wobei der Modul einen gemeinsamen Speicheradressraum (448) für die Mehrzahl der Prozessoren bereitstellt.

18. Verfahren nach Anspruch 17, wobei der Adressraum einen ersten Bereich (450) für Abarbeitungsschlangen (454) und Puffer (456) sowie einen zweiten Bereich (452) für das Anzeigen von Positionen und Zeichenträger aufweist.

19. Verfahren nach Anspruch 17 oder 18 mit dem Schritt, daß auf mehrfach auftretende Vorfälle reagiert wird, um einen getrennten Speicherbereich für jeden Vorfall bereitzustellen.

20. Verfahren nach einem der Ansprüche 11 bis 19 für das Initialisieren eines tragbaren Betriebssystems für bzw. auf einem Prozessor (410) in einem Systemelement für die Telekommunikation, wobei das Systemelement (46, 72) für die Telekommunikation einen oder mehrere Prozessoren für das Durchleiten von Nachrichten zu und von dem Element aufweist.

21. Systemelement (46, 72) für die Telekommunikation, mit einem oder mehreren Prozessoren für das Hindurchleiten von Nachrichten zu und von dem Element (26, 72) und mit einem tragbaren Betriebssystem, welches durch einen Maschinensteuermodul nach einem der Ansprüche 1 bis 10 gebildet, welcher an bzw. für zumindest einen der Prozessoren initialisiert ist.

## Revendications

1. Module de commande de machine pour initialiser un système d'exploitation portable sur un processeur, le module de commande de machine comprenant un objet de noyau indépendant du processeur (400, 420, 430) et un ou plusieurs objets spécifiques du processeur (436, 438), cet objet de noyau étant conçu pour réagir au moment de l'initialisation à des paramètres (L1, L2) identifiant un objet spécifique du processeur, pour établir une liaison de l'objet de noyau vers l'objet spécifique du processeur, pour configurer l'objet de noyau pour le processeur.

2. Module selon la revendication 1, dans lequel au moins un objet spécifique du processeur définit une fonction d'interruption (436) pour le processeur.

3. Module selon la revendication 1 ou la revendication 2, dans lequel l'objet de noyau est conçu pour réagir à des paramètres identifiant un objet spécifique du processeur, en établissant une table de pointeurs (430) contenant des pointeurs dirigés vers l'objet spécifique du processeur.

4. Module selon l'une quelconque des revendications précédentes, comprenant un objet spécifique du processeur pour un microcontrôleur.

5. Module selon l'une quelconque des revendications précédentes, comprenant un objet spécifique du processeur pour un microprocesseur.

6. Module selon l'une quelconque des revendications précédentes, pouvant fonctionner dans un environnement d'exploitation multiprocesseur.

7. Module selon la revendication 6, dans lequel le module est conçu pour établir un espace d'adresse de mémoire (448) commun pour la pluralité des processeurs.

8. Module selon la revendication 7, dans lequel l'espace d'adresse comprend une première zone (450) pour des files d'attente (454) et des tampons (456), et une seconde zone (452) pour des positions de signalisation et des sémaphores.

9. Module selon la revendication 7 ou la revendication 8, conçu pour réagir à de multiples instanciations en établissant une partition de mémoire séparée pour chaque instance.

10. Module selon l'une quelconque des revendications précédentes, ce module formant un système d'exploitation pour un processeur lorsqu'il est initialisé sur ce dernier.

11. Procédé d'initialisation d'un système d'exploitation portable, le procédé comprenant la fourniture de paramètres (L1, L2) identifiant un objet spécifique du processeur (436, 438) à un objet de noyau indépendant du processeur (400, 420, 430), pour établir une liaison de l'objet de noyau vers l'objet spécifique du processeur, grâce à quoi l'objet spécifique du processeur configure pour le processeur l'objet de noyau indépendant du processeur.

12. Procédé selon la revendication 11, comprenant une étape de définition d'une fonction d'interruption (436) pour le processeur par au moins un objet spécifique du processeur.

13. Procédé selon la revendication 11 ou la revendication 12, comprenant une étape dans laquelle l'objet de noyau réagit à des paramètres identifiant un objet spécifique du processeur en établissant une table de pointeurs contenant des pointeurs dirigés vers l'objet spécifique du processeur.

14. Procédé selon l'une quelconque des revendications 11 à 13, comprenant une étape de fourniture d'un objet spécifique du processeur pour un microcontrôleur.

15. Procédé selon l'une quelconque des revendications 11 à 14, comprenant une étape de fourniture d'un objet spécifique du processeur pour un microprocesseur.

16. Procédé selon l'une quelconque des revendications 11 à 15 dans un environnement d'exploitation multiprocesseur.

17. Procédé selon la revendication 16, dans lequel le module établit un espace d'adresse de mémoire (448) commun pour la pluralité des processeurs.

18. Procédé selon la revendication 17, dans lequel l'espace d'adresse comprend une première zone (450) pour des files d'attente (454) et des tampons (456), et une seconde zone (452) pour des positions de signalisation et des sémaphores.

19. Procédé selon la revendication 17 ou la revendication 18, comprenant une étape consistant à réagir à de multiples instanciations en établissant une partition de mémoire séparée pour chaque instance.

20. Procédé selon l'une quelconque des revendications 11 à 19, pour initialiser un système d'exploitation portable sur un processeur (410) dans un élément de système de télécommunication, cet élément de système de télécommunication (46, 72) comprenant un ou plusieurs processeurs pour échanger des messages avec cet élément.

21. Elément de système de télécommunication (46, 72) comprenant un ou plusieurs processeurs pour échanger des messages avec cet élément (46, 72) et un système d'exploitation portable formé par un module de commande de machine conforme à l'une quelconque des revendications 1 à 10, initialisé sur au moins un desdits processeurs.
